# EUROPEAN PATENT APPLICATION

(11) **EP 2 708 762 A2**
(43) Date of publication of application: **19.03.2014**
(21) Application number: 13180980.8
(22) Date of filing: 20.08.2013
(51) Int. Cl.: F16B 5/06, F16B 37/08, F16B 21/07

(54) **Fastening device**

(30) Priority: 12.09.2012 DE 202012008730 U
(71) Applicant: Newfrey LLC, Newark, Delaware 19711 (US)
(72) Inventor: Kempf, Christian, 35394 Giessen (DE); Reindl, Johann-Aldalbert, 35394 Giessen (DE); Schmidt, Thomas, 35394 Giessen (DE)
(74) Representative: Witte, Weller & Partner Patentanwälte mbB

(57) **Abstract**

Fastening device (12) for fastening a component (18) on a base body (16) which has a surface portion (20), from which protrudes an anchoring means (14) such as a stud, said fastening device having a first fastening element (30) which has an anchoring means reception (50) in order to slip the first fastening element (30) onto the anchoring means (14) in an axial direction and to secure it on the anchoring means (14) in an axial manner by means of a securing device (40), wherein the first fastening element (30) also has a first flange portion (34) for the component (18); a second fastening element (32) which has an abutment portion (60) for abutment against the surface portion (20) of the base body (16) and a second flange portion (54) for the component (18), wherein the second fastening element (32) is connectable to the first fastening element (30) in such a manner that the component (18) can be accommodated between the first and the second flange portions (34, 54), wherein at least one portion of the first and/or of the second flange portion (34, 54) is realized so as to be elastically deformable in the axial direction such that the component (18) is securable on the fastening device (12) in an elastically clamped manner in the axial direction.

## Description

The present invention relates to a fastening device for fastening a component on a base body, which has a surface portion in relation to which protrudes an anchoring means such as a stud.

In addition, the present invention relates to a pre-assembled fastening device and to a fastening system having such a fastening device and an anchoring means.

In the field of the fastening device, it is known to join anchoring means such as studs on base bodies. In so far as the anchoring means and the base body are produced from a metal, the joining can be carried out by means of so-called stud welding. However, bonding anchoring means on base bodies is also known. If the anchoring means and the base body are produced from a thermoplastic material, said components can also be welded together in a thermoplastic manner.

Fastening devices of this type are also known as so-called clips which are produced, as a rule, from plastics material and are secured on the anchoring means. In this case, the clip can be provided with means in order to fix, for example, elongated components such as cable looms, brake lines or the like with reference to the base body.

It is additionally known to secure plane components such as, for example, underbody plates of automobile vehicles, engine covers, etc., in this manner in relation to a base body in the form of a portion of a vehicle body sheet.

For example, it is possible in this connection to provide the fastening device in the form of a nut which is screwed or knocked onto a stud, the component being secured in between.

Fastening operations of this type, however, are relatively expensive. As a rule, a component is secured on the base body in this case by means of several fastening devices, a corresponding number of anchoring means being provided on the surface portion of said base body. In this connection, there is also the problem of tolerance compensation with reference to the spacings between anchoring means or the spacings between the fastening devices. The components can also have non-uniform thicknesses over their surface such that tolerance compensation is also desirable in the axial direction.

Against said background, it is an object of the invention to provide an improved fastening device as well as an improved fastening system.

Said object is achieved by a fastening device for fastening a component on a base body which has a surface portion from which protrudes an anchoring means such as a stud, said fastening device having a first fastening element, which has an anchoring means reception in order to slip the first fastening element onto the anchoring means in an axial direction and to secure it on the anchoring means in an axial manner by means of a securing device, wherein the first fastening element also has a first flange portion for the component, and having a second fastening element, which has an abutment portion for abutment against the surface portion of the base body and a second flange portion for the component, wherein the second fastening element is connectable to the first fastening element in such a manner that the component can be accommodated between the first and the second flange portion, wherein at least one portion of the first and/or of the second flange portion is realized so as to be elastically deformable or deflectable in the axial direction such that the component is securable on the fastening device in the axial direction in an elastically clamped manner.

In addition, the above object is achieved by a pre-assembled fastening arrangement having a fastening device of the abovementioned type and having a component which has a through-opening, wherein a shaft portion of the first fastening element extends through the through-opening, wherein the first flange portion abuts against the component on one side, and wherein the second flange portion abuts against the component on the opposite side.

Finally, the above object is achieved by a fastening system having a fastening device according to the invention and having an anchoring means.

In the case of the fastening device according to the invention, the achievement of the elastically deformable or elastically deflectable flange portion is that the component is securable on the fastening device in an elastically clamped manner, tolerances in the axial thickness of the component being able to be compensated. In addition, this means that it is possible to prevent the securing of the component on the fastening device coming loose as a result of permanent dynamic loads, or it is possible to reduce the probability of it coming loose.

The present invention is used in particular in the field of automotive engineering in order, for example, to assemble components, such as underbody plates to improve the coefficient of drag, engine covers etc., on a portion of the vehicle bodywork. In this environment, permanent dynamic loads or vibrations occur regularly such that, through the elastic clamping of the component on the fastening device according to the invention, the risk of them coming loose is clearly reduced.

In addition, the fastening device is designed such that said fastening device, by way of the abutment portion of the second fastening element, abuts against the base body preferably exclusively, in particular against the surface portion thereof or against a further component which is connected thereto. The axial clamping, in this case, ensures that the second component is pressed away from the first component in the axial direction, the first component being secured in the axial direction on the anchoring means. As a result, not only is the component preferably secured on the fastening device in an elastically clamped manner in the axial direction. Rather, through the ability of one flange portion or of both flange portions to deform or deflect elastically, it is possible to clamp the fastening device with the component secured thereon in an elastic manner on the base body. Accordingly, even a permanent dynamic load cannot result in axial play in the fastening, or said risk is able to be reduced.

The first fastening element and the second fastening element, in this case, are preferably mounted so as to be axially telescopic such that the clamping of the component on the fastening device is converted directly into relative axial clamping between the fastening elements. Since preferably only the second fastening element abuts against the base body by way of its abutment portion, consequently, as a result, a dynamically permanently highly loadable fastening device is realized for the component on the base body.

Due to the fact that the component lies between the flange portions of the fastening elements, the fastening device can be pre-assembled on the component such that a pre-assembled fastening arrangement is produced.

For example, several of these types of fastening devices can be pre-assembled on one component such that a pre-assembled fastening arrangement is produced having one component and a plurality of fastening devices which can be slipped onto a corresponding plurality of anchoring means in an axial manner and secured thereon.

The object is consequently completely achieved.

In the case of the fastening device according to the invention, it is particularly preferred when the securing device has a latching device for securing the first fastening element on the anchoring means.

Said measure makes it possible to secure the fastening device or a pre-assembled fastening arrangement thereon simply by means of pressing onto the anchoring means in an axial manner.

In this case, an individual latching contour, for example, can be provided on the anchoring means such that a pre-defined position between the first fastening element and the anchoring means is achievable.

In the case of the fastening system according to the invention, however, it is preferred when the anchoring means is realized as a stud with a plurality of axially adjacent circumferential grooves or as a threaded stud.

In this way, the first fastening element can be secured with reference to the anchoring means in a plurality of axial relative positions. This also makes it possible for components with different thicknesses to be securable on a base body by means of the same type of fastening device.

The first latching device, in this case, is preferably designed such that withdrawing the first fastening element from the anchoring means in opposition to the slipping-on direction is prevented, in particular is prevented in a positive-locking manner.

According to a further preferred embodiment, the second fastening element is securable on the first fastening element by means of a second latching device.

In this case, a pre-assembly position can be set up in particular by means of the second latching device such that the first fastening element and the second fastening element can be secured in a captive manner on the component by means of the latching device in order to create a pre-assembled fastening arrangement in this way. In a corresponding manner, in the case of the pre-assembled fastening arrangement, it is preferred when the first and the second fastening element are secured against coming loose axially by means of such a second latching device.

In this case, it is particularly preferred when the second latching device is realized such that in one latching position a movement of the fastening elements in relation to each other in a first axial direction is blocked and in an opposite second axial direction mobility of the fastening elements in relation to each other is made possible.

The first axial relative movement is that where the fastening elements are pulled away from each other, as a result of which they could be loosened from the pre-assembled position. A movement of this type is prevented by the second latching device in the latching position. On the other hand, an opposite axial movement, that is to say further telescoping, is not prevented by the second latching device. Consequently, it is possible to telescope the first and the second fastening element even further during final assembly where the first fastening element is slipped onto the anchoring means, as a result of which the elastic clamping of the component between the flange portions is increased and as a result of which consequently also the elastic clamping of the fastening elements in the axial direction with reference to the base body is increased. This means that the fastening device can obtain even better characteristics against loosening as a result of permanent dynamic loads.

It is obvious that in this connection it is preferred when the first latching device has not only one latching position but rather a plurality of axial latching positions in order to support this characteristic more.

In addition, it is advantageous overall when the first fastening element has a shaft portion, wherein the second fastening element has a hollow shaft portion and wherein the shaft portion is insertable into the hollow shaft portion for connecting the second fastening element to the first fastening element.

In the case of said embodiment, a first latching device and/or a second latching device can be realized in a relatively simple structural manner. In this case, it is particularly preferred when the anchoring means reception of the first fastening element is realized on the shaft portion thereof.

In other words, the shaft portion can have an axial recess for the reception of the anchoring means, said axial recess serving as the anchoring means reception.

According to a further preferred embodiment, at least one first latching tongue, which can be deflected in the radial direction for the latching securement of the first fastening element on the anchoring means, is realized on the shaft portion.

In this case, the latching tongue projects into the anchoring means reception and, when the anchoring means is inserted, is deflected radially in order then to latch into a suitable latching indentation on the anchoring means and in this way to secure the first fastening element in a latching manner on the anchoring means.

The latching tongue, in this case, is preferably designed such that it can realize high withdrawal forces.

In this case, the latching tongue can extend, for example, inclinedly upward in opposition to the direction in which the first fastening element is slipped onto the anchoring means.

According to a further preferred embodiment, at least one radial shoulder is realized on the shaft portion, wherein at least one second latching tongue is realized on the hollow shaft portion, said second latching tongue being realized so as to be radially deflectable for inserting the shaft portion and engaging behind the radial shoulder when securing the second fastening element on the first fastening element.

A second latching device is consequently realized by means of the radial shoulder and the second latching tongue, it being possible to realize said second latching device, for example, for the pre-assembly of the fastening device on the component.

In addition, it is advantageous overall when the first flange portion and/or the shaft portion has/have at least one axial shoulder for limiting the radial mobility of a component which is accommodated between the flange portions.

The radial mobility is certainly limited by the radial shoulder. However, the radial mobility is preferably set up such that a large tolerance compensation is realizable, in particular when several fastening devices are pre-assembled on one component.

In this case, the pre-assembly of the fastening device on the component, realized preferably by means of the second latching device, is designed such that the clamping set up in this manner is either equal to zero or is very low such that the component is extensively freely movable (within the radial mobility set up by the axial shoulder) in the pre-assembly position in order to obtain tolerance compensation in this way.

Not until the final assembly position is reached and the first and the second fastening element are telescoped even further in an axial manner, is the clamping onto the component increased, and consequently also the clamping by means of which the fastening device is secured on the base body.

In addition, it is advantageous overall when the second fastening element has a pressing portion which is deformable in the axial direction for abutment against the surface portion of the base body or against a further component resting on the surface portion.

The pressing portion, which can be formed, for example, by spring elements which extend radially inclinedly downward, can contribute, in this case, to increasing clamping between the fastening device and the base body.

On the other hand, it is possible to fasten further components such as, for example, thermal shielding plates, large trim panels, engine covers, underbodies, etc. additionally to the component on the base body by means of the same fastening device.

The pressing portion, in this case, rests on the further component in the final assembly position and clamps said further component against the base body as a result of elastic deformation.

In this case, it is preferred when, in the non-deformed state, the pressing portion protrudes in the axial direction in relation to the abutment portion.

Consequently, the pressing portion is deformed at all times in the final assembly position, regardless of whether or not a further component is inserted between the pressing portion and the base body.

In the case of the pre-assembled fastening arrangement according to the invention, as mentioned above, it is preferred when the first and the second fastening element are secured against coming loose axially by means of a latching device (the second latching device), and this is in the pre-assembly position.

The function of the latching device, in this case, can be eliminated in the final assembly position.

In addition, in the case of the pre-assembled fastening arrangement, it is preferred when the component is mounted so as to be movable in a defined manner in the radial direction with reference to the fastening elements. This means, as stated above, that tolerance compensation can be achieved in the radial direction.

The above object is additionally achieved by a method for fastening a component on a base body which has a surface portion, in relation to which protrudes an anchoring means such as a stud, a first fastening element and a second fastening element being first of all axially telescoped, the fastening elements in each case having a flange portion, between which the component is held in a pre-assembly position. The pre-assembly position, in this case, is preferably set up by means of a latching device such that the fastening elements are pre-assembled in a non-releasable manner on the component, the pre-assembled fastening arrangement being pressed onto the anchoring means in a further step. The first fastening element is secured on the anchoring means during the final assembly, the second element being supported on the base body by means of an abutment portion in such a manner that the component is clamped elastically in the axial direction between the flange portions and the fastening elements are also clamped elastically against each other in the axial direction.

The final assembly, in this case, is preferably obtained by the pre-assembled fastening arrangement being pressed onto the anchoring means until the abutment portion strikes against the base body.

According to a further preferred embodiment, the first fastening element is then pressed in further in the axial direction in order to press the second fastening element against the base body and at the same time to clamp the component between the flange portions, which can be realized, for example, as spring plates.

According to a further preferred embodiment, the first fastening element latches behind the stud by means of at least one latching tongue.

The component is preferably clamped on the base body by the fastening device irrespective of tolerance, particularly irrespective of tolerance with regard to the axial thickness of the component, with respect to the height of the anchoring means and/or with respect to the radial stud position.

All in all, a fastening device is realized, by means of which one or several components can be assembled on a base body in one single assembly step. "Subsequently rotating" fastening elements in order to clamp them together, for example, is not necessary. In addition, height and position tolerances of the anchoring means can be compensated. It is also advantageous that components with a different axial thickness are able to be fastened, and that, where applicable, more than one component is fastenable on a base body by means of one assembly operation.

It is obvious that the features mentioned above and the features yet to be mentioned below are usable not only in the combination provided in each case but also in other combinations or standing alone without departing from the framework of the present invention.

Exemplary embodiments of the invention are explained in the following description and are shown in the drawing, in which, in detail:
- Figure 1: shows a schematic cross sectional view through an embodiment of a fastening system according to the invention having a fastening device according to the invention;
- Figure 2: shows a view of a detail II in Figure 1 with an alternative embodiment of a fastening device;
- Figure 3: shows a side view of a further embodiment of a fastening device according to the invention;
- Figure 4: shows a perspective view of the fastening device of Figure 3;
- Figure 5: shows a sectional view of the fastening device of Figure 3 and 4 with a stud inserted;
- Figure 6: shows a sectional view along the line VI-VI of Figure 5 having a schematically indicated base body, on which the stud is secured; and
- Figure 7: shows a view comparable to Figure 6 to represent the possibility of fastening a further component.

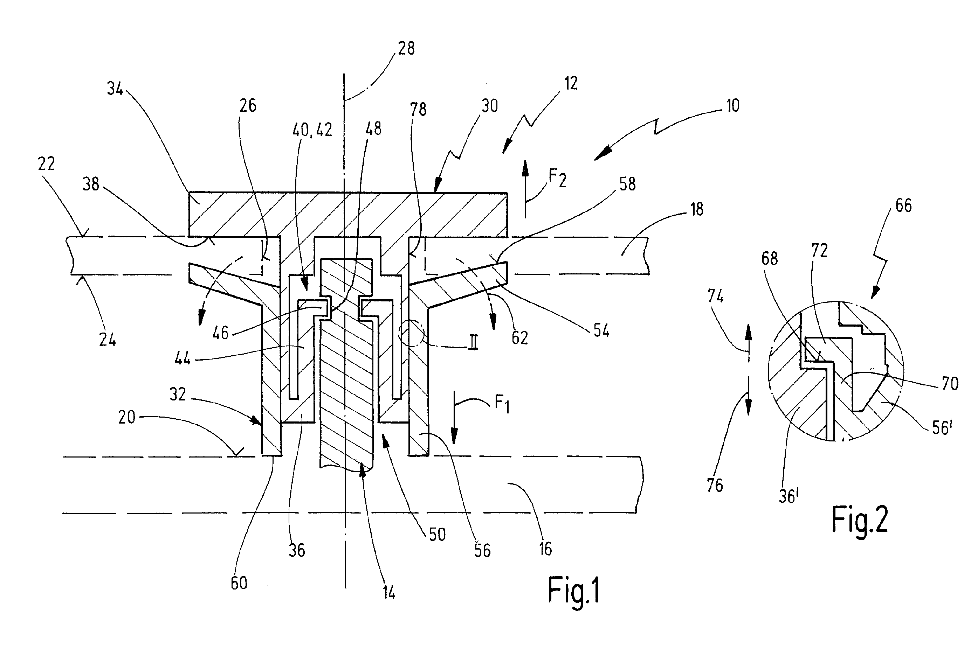

Figure 1 shows a schematic representation of a fastening system 10. The fastening system 10 includes a fastening device 12 and an anchoring means 14 in the form of a stud and serves the purpose of fastening a plane component 18 on a base body 16.

The stud 14 is joined onto the base body 16, for example by means of stud welding, stud bonding or the like. The stud 14 protrudes preferably vertically in relation to a surface portion 20 of the base body 16.

The component 18 has a top side which is remote from the base body 16 and an opposite bottom side 24. In addition, the component 18 has a through-opening 28. A longitudinal axis of the fastening system 10 is shown at 28, the longitudinal axis 28 being aligned concentrically with respect to the stud 14.

The fastening device 12 has a first fastening element 30 and a second fastening element 32. The first fastening element 30 has a first flange portion 34 with a diameter which is greater than the diameter of the through-opening 26 as well as a shaft portion 36. A bottom side 38 of the first flange portion 34 is designed to abut against the top side 22 of the component 18.

The first fastening element 30 is securable on the stud 14 by means of a securing device 40. The securing device 40 has a first latching device 42. The first latching device 42 includes at least one first latching tongue 44, preferably two radially opposite latching tongues 44 which are elastically deflectable in the radial direction and at the free ends of which in each case a first latching lug 46 is realized. At least one latching indentation 48, into which the first latching tongue or tongues 44 can engage by way of their latching lug 46, is realized on the stud 14.

The first fastening element 30 also includes a central anchoring means or stud reception 50 which can be realized as a blind hole in the shaft portion 36 or as a through-opening through the first fastening element 30.

The first fastening element 30 can be slipped on the stud 14 in the axial direction in such a manner that said stud penetrates into the stud reception 50, the at least one latching tongue 44 being deflected radially outward (suitable insert inclinations are not shown in Figure 1, but can be provided where required). The first fastening element 30 can then be slipped onto the stud 14 in the axial direction just until the first latching lug 46 of the at least one first latching tongue 44 engages into the latching indentation 48 of the stud in such a manner that the first fastening element 30 is secured on the stud 14 in the axial direction. In this position, a bottom side of the first fastening element 30 is at a spacing from the surface portion 20 of the base body 16.

The second fastening element 32 has a second flange portion 54 and a hollow shaft portion 56. The shaft portion 36 of the first fastening element 30 is insertable into the hollow shaft portion 56 in the axial direction. A top side 58 of the second flange portion 54, the diameter of which is greater than that of the through-opening 26, is designed to abut against the bottom side 24 of the component 18.

A bottom side of the hollow shaft portion 56 is realized as an abutment portion 60 to abut against the surface portion 20 of the base body 16.

The second flange portion 54 is realized so as to be elastically deformable or deflectable in the axial direction as indicated in Figure 1 by arrows 62. The second flange portion 54, in this connection, can be divided into a plurality of spring tongues in the circumferential direction.

In the final assembly position shown of the fastening system 10, the second flange portion 54 is deflected in the axial direction in such a manner that the component 18 is secured in an elastically clamped manner between the flange portions 34, 54, and in such a manner that the fastening elements 30, 32 are pressed away from each other in the axial direction by the elastic deformation or deflection of the second flange portion 54, that is to say in a direction in which the first fastening element 30 is pressed out of the second fastening element 32. In this case, the first fastening element 30 is supported by the latching device 42 in the axial direction against the stud 14. In this case, the second fastening element 32 is supported against the base body 16 by means of the abutment portion 60. As a result, the fastening device is also clamped elastically on the base body 16 by means of the elastic deformation of the second flange portion 54. As a result, the fastening system 10 can be realized so as to be desensitized in relation to permanently dynamic loads. In particular, the fastening system 10, as a rule, cannot become loose and consequently there can be no axial play of the fastening system 10 as a result of dynamic loads.

In the case of the fastening system 10, the first fastening element 30 can be secured in an axial position on the stud 14 such that the fastening system 10, as a rule, is designed for a component with a specific axial thickness. Certain tolerance compensation in the axial direction can be effected, however, as a result of the axial clamping.

It is preferred when a plurality of latching indentations 48, which are spaced apart from each other in the axial direction, are realized on the stud 14 or when the stud 14 is realized as a threaded stud. In this case, the at least one latching tongue 44 can cooperate with the stud 14 in different axial positions. As a result, it is possible to secure components 18 with different axial thicknesses on the base body 16 by means of the same type of fastening device 12.

In addition, it is generally preferred when the component 18 is secured on the base body 16 by means of several fastening devices 12. To this end, the component 18 has a corresponding plurality of through-openings 26, and a corresponding plurality of studs 14 are secured on the base body 16.

The first fastening element 30, in this case, has an axial shoulder 78, by means of which at least in a pre-assembly position, a radial mobility of the component 18 with reference to the fastening device 12 can be realized. As a result, tolerance compensation can be achieved not only in the axial direction but also with regard to the position (of the spacing) between several studs.

The fastening system 10 is designed for the purpose of being able to achieve the final assembly position by means of one single operating step, the component 18 first of all being secured between the flange portions 34, 54 by the fastening elements 30, 32 being telescoped in an axial manner. The final assembly position can then be achieved simply by pressing the first fastening element 30 onto the stud 14, as a result of which the elastic clamping of the component 18 and the elastic clamping of the fastening device 12 with reference to the base body 16 is set up.

In order to be able to pre-assemble the fastening device 12 on the component 18 in a reliable manner and to be able to realize a pre-assembled fastening arrangement in this way, a second latching device 66 is preferably provided, as is shown schematically in Figure 2.

The second latching device 66 includes a radial shoulder 68 on the shaft portion 36' of the first fastening element 30, along with at least one second latching tongue 70 which is realized on the hollow shaft portion 56' and is developed so as to be deflectable in the radial direction. On the free end thereof, the second latching tongue 70 includes a second latching lug 72.

When inserting the shaft portion 36' of the first fastening element 30 into the hollow shaft portion 56' of the second fastening element 32, the second latching tongue 70 is deflected radially outward until it engages behind the radial shoulder 68.

In said position, a relative movement of the two fastening elements 30, 32 in a first axial direction 74 (in opposition to the direction of the telescoping) is prevented. Accordingly, the fastening device 12 can be pre-assembled on the component 18 in this way so as to be non-releasable. In addition, a plurality of such types of fastening devices 12 can be pre-assembled in a captive manner on one component 18.

In the pre-assembly position set up by the second latching device 66, the first and the second flange portion 34, 54 are spaced apart from each other in the axial direction such that the component 18 is movable in a limited manner in the radial direction with reference to the fastening device 12.

The axial shoulder 78 on the first fastening element 30 serves for this purpose, said axial shoulder being able to be realized on the outer circumference of the shaft portion 36 here, but also being able to be realized by a shoulder on the bottom side of the first flange portion 34.

As a result, in particular tolerance compensation with regard to the relative position of several studs can be realized.

The second latching device 66, however, enables an axial movement in the opposite axial direction 76, i.e. further telescoping of the two fastening elements 30, 32.

As a result, in a final assembly position increased preliminary tensioning can be exerted onto the component 18 by means of the two flange portions 34, 54 such that the component 18 can be held in a substantially immovable manner with reference to the fastening device 12. In addition, as a result, the elastic clamping of the fastening device 12 with reference to the base body 16 can be realized, as described above,

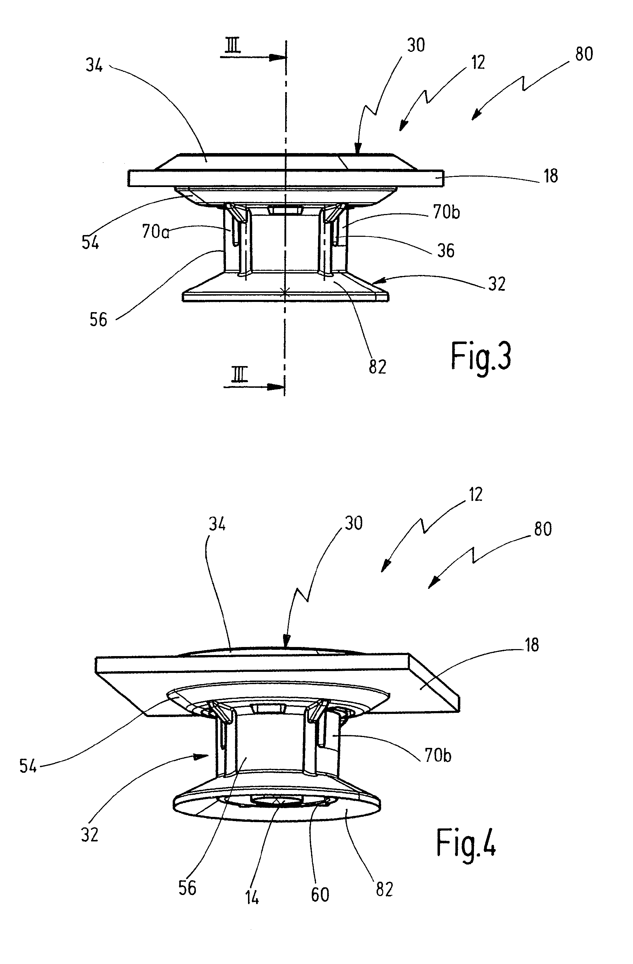

The following Figures 3 to 7 show a further embodiment of a fastening device 12 or of a fastening system 10 which, with regard to design and method of functioning, generally correspond to the fastening system 10 described with reference to Figures 1 and 2 or to the fastening device 12 described there. Identical elements are consequently characterized by identical references. Essentially, the differences are explained below.

The second fastening element 32, in the case of said embodiment, has two radially opposite second latching tongues 70a, 70b. In addition, a plurality of axial ribs are provided for stiffening purposes on the outer circumference of the hollow shaft portion 56, said ribs, however, not being assigned any specific references in the figures.

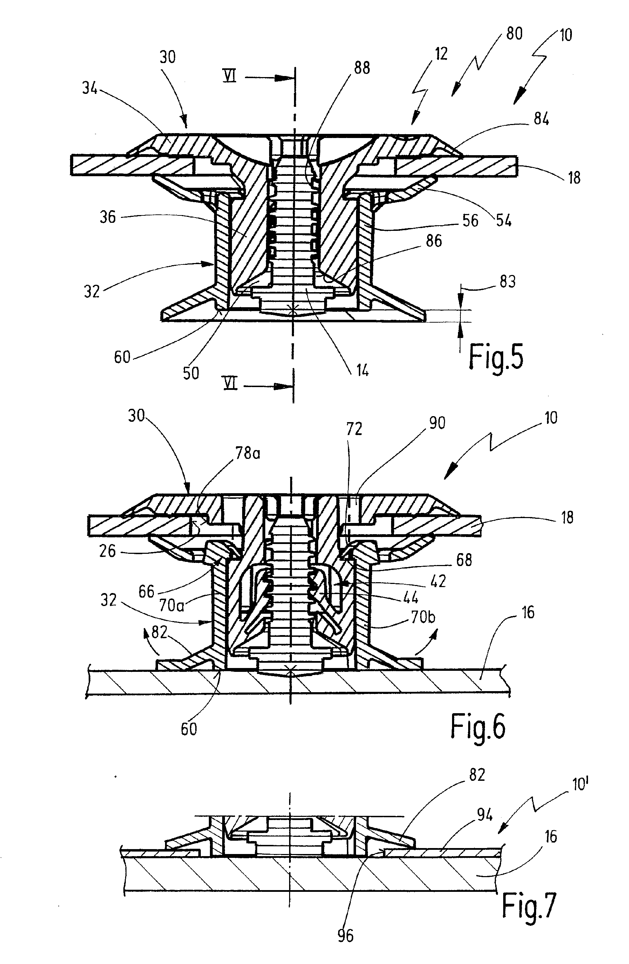

The second fastening element 32 has on its bottom side, i.e. the side remote from the second flange portion 54, a pressing portion 82 which can be realized by a plurality of spring tongues which are arranged distributed over the circumference. The pressing portion 82 is elastically deformable or deflectable in the axial direction and extends beyond the abutment portion 60 in the axial direction, by a distance 83, as is shown in Figure 5.

It can also be seen from Figure 5 that, on its radially outside portion, the first flange portion 34 has flange tongues 84 which can support the component 18 being clamped axially between the flange portions 34, 54 or can serve as anti-twist protection.

It is also shown in Figure 5 that the stud reception 50, on the bottom end of the first fastening element 30, has an insertion cone 86 in order to simplify the assembly. In particular, in the case of a pre-assembled fastening arrangement, as is shown in Figures 3 and 4 by way of the reference 80, during an assembly operation where several fastening devices 12 are secured on one component 18, in this connection, automatic centering of the fastening devices can be effected with reference to the studs secured rigidly on the base body 16 since radial compensation is possible. For this purpose, Figure 6 shows that the flange portion 34, on the bottom side thereof, has an axial shoulder 78a which has a diameter which is smaller than the diameter of the through-opening 26 in order to provide for limited radial mobility in this manner.

In Figures 3 to 5, the fastening device 12 is pre-assembled on the component 18 such that a pre-assembled fastening arrangement 80 is produced. In this connection, the latching lugs 72 of two radially opposite second latching tongues 70a, 70b engage behind corresponding radial shoulders 68 on the outer circumference of the shaft portion 36. Although this is not shown in any detail in the Figures, the latching shoulders 68 are defined in the circumferential direction in such a manner that the fastening elements 30, 32 are only generally securable together in a certain relative position of rotation.

In this case, the achievement of the elastic clamping is also that rotating of the first fastening element 30 in relation to the anchoring means 14 is able to be prevented. The anchoring means 14, as is shown in Figures 5 and 6, is designed as a threaded stud. The first latching device 42, in this case, has two radially opposite latching tongue devices which in each case have two individual latching tongues 44 which are axially spaced apart from each other. The latching tongues 44, in this case, are aligned on the shaft portion 36 such that they point inclinedly inward, aligned toward the first flange portion 34. As a result, increased protection against withdrawing the first fastening element 30 from the anchoring means 14 can be realized.

Through the anti-twist protection on account of the radial shoulders 68, the first fastening element 30 can be prevented from rotating with reference to the second fastening element 30 by means of the elastic preliminary tensioning and consequently the first fastening element 30 can be prevented from "rotating free" from the threaded stud.

The thread of the threaded stud 14 is shown in Figure 5 by way of the reference 88.

Figure 6 also shows that corresponding unlatching openings 90 assigned to the second latching tongues 70a, 70b are provided on the first flange portion 34. A tool can be inserted by means of the unlatching openings 90, said tool pressing the second latching tongues 70 radially outward such that the anti-twist protection is eliminated and the first fastening element 30 can be unscrewed from the threaded stud 14 in order to dismantle the fastening device 12 in this manner.

The flange tongues 84 described further above can also be realized as circumferentially defined tongues which bore into the, where applicable, soft top side 22 of the component 18 in order to realize or to support the anti-twist protection of the first fastening element 30 with reference to the component 18.

Figure 6 shows that the pressing portion 82 has deflected axially in the end position in such a manner that the abutment portion 60 is able to move into abutment against the surface portion of the base body 20. The elastic deflection of the pressing portion 82 can support the elastic clamping in this case.

Figure 7 shows an alternative embodiment of a fastening system 10' where between the pressing section 82 and the top side of the base body 16 a further component 94 is inserted which has an opening 96 which is preferably greater than the outer circumference of the abutment portion 60.

In the case of said embodiment, the fastening device 12 is able to be used not only for fastening the component 18 on the base body 16, but also at the same time for fastening the further component 94 on the base body 16.

The further component 94, in this case, is secured in a clamped manner equally elastically with reference to the base body 16 by means of the axially elastic deflection of the pressing portion 82.

## Claims

1. Fastening device (12) for fastening a component (18) on a base body (16) which has a surface portion (20), from which protrudes an anchoring means (14) such as a stud, said fastening device having
- a first fastening element (30) which has an anchoring means reception (50) in order to slip the first fastening element (30) onto the anchoring means (14) in an axial direction and to secure it on the anchoring means (14) in an axial manner by means of a securing device (40), wherein the first fastening element (30) also has a first flange portion (34) for the component (18);
- a second fastening element (32) which has an abutment portion (60) for abutment against the surface portion (20) of the base body (16) and a second flange portion (54) for the component (18), wherein the second fastening element (32) is connectable to the first fastening element (30) in such a manner that the component (18) can be accommodated between the first and the second flange portions (34, 54),
wherein at least one portion of the first and/or of the second flange portion (34, 54) is realized so as to be elastically deformable in the axial direction such that the component (18) is securable on the fastening device (12) in an elastically clamped manner in the axial direction.

2. Fastening device according to Claim 1, wherein the fastening device (40) has a first latching device (42).

3. Fastening device according to Claim 1 or 2, wherein the second fastening element (32) is securable on the first fastening element (30) by means of a second latching device (66).

4. Fastening device according to Claim 3, wherein the second latching device (66) is realized such that in one latching position a movement of the fastening elements (30, 32) in relation to each other in a first axial direction (74) is blocked and in an opposite second axial direction (76) mobility of the fastening elements (30, 32) in relation to each other is made possible.

5. Fastening device according to one of Claims 1 - 4, wherein the first fastening element (30) has a shaft portion (36), wherein the second fastening element (32) has a hollow shaft portion (56) and wherein the shaft portion (36) is insertable into the hollow shaft portion (56) for connecting the second fastening element (32) to the first fastening element (30).

6. Fastening device according to Claim 5, wherein the anchoring means reception (50) is realized on the shaft portion (36) of the first fastening element (30).

7. Fastening device according to Claim 5 or 6, wherein at least one first latching tongue (44) which can be deflected in the radial direction for the latching securement of the first fastening element (30) on the anchoring means (14) is realized on the shaft portion (36).

8. Fastening device according to one of Claims 5 - 7, wherein at least one radial shoulder (68) is realized on the shaft portion (36), wherein at least one second latching tongue (70) is realized on the hollow shaft portion (56), said second latching tongue being realized so as to be radially deflectable for inserting the shaft portion (36) and engaging behind the radial shoulder (68) when securing the second fastening element (32) on the first fastening element (30).

9. Fastening device according to one of Claims 1 - 8, wherein the first flange portion (34) and/or the shaft portion (36) has at least one axial shoulder (78) for limiting the radial mobility of a component (18) which is accommodated between the flange portions (34, 54).

10. Fastening device according to one of Claims 1 - 9, wherein the second fastening element (32) has a pressing portion (82) which is elastically deformable in the axial direction for abutment against the surface portion (20) of the base body (16) or against a further component (94) resting on the surface portion (20).

11. Fastening device according to Claim 10, wherein, in the non-deformed state, the pressing portion (82) protrudes in the axial direction in relation to the abutment portion (60).

12. Pre-assembled fastening arrangement (80) having a fastening device (12) according to one of Claims 1 -11 and a component (18) which has a through-opening (26), wherein a shaft portion (36) of the first fastening element (30) extends through the through-opening (26), wherein the first flange portion (34) abuts against the component (18) on one side (22), and wherein the second flange portion (54) abuts against the component (18) on the opposite side (24).

13. Pre-assembled fastening arrangement according to Claim 12, wherein the first and the second fastening element (30, 32) are secured against axial loosening by means of a latching device (66).

14. Pre-assembled fastening arrangement according to Claim 12 or 13, wherein the component (18) is mounted so as to be movable in a limited manner in the radial direction with reference to the fastening elements (30, 32).

15. Fastening system (10) having a fastening device (12) according to one of Claims 1 - 11 and an anchoring means (14).

16. Fastening system according to Claim 15, wherein the anchoring means (14) is realized as a stud having a plurality of axially adjacent circumferential grooves or as a threaded stud.
